# EUROPÄISCHE PATENTSCHRIFT

(11) **EP 3 197 267 B1**
(45) Veröffentlichungstag und Bekanntmachung des Hinweises auf die Patenterteilung: **04.11.2020**
(21) Anmeldenummer: 15793673.3
(22) Anmeldetag: 23.09.2015
(51) Int. Cl.: A01G 17/06

(54) **VORRICHTUNG UND PFAHL FÜR VORZUGSWEISE DEN WEIN- ODER OBSTBAU**
DEVICE AND STAKE, PREFERABLY FOR USE IN POMICULTURE OR VITICULTURE
DISPOSITIF ET PIEU DE PRÉFÉRENCE POUR VITICULTURE OU FRUITICULTURE

(30) Priorität: 23.09.2014 AT 506782014
(43) Veröffentlichungstag der Anmeldung: 02.08.2017
(73) Patentinhaber: voestalpine Krems GmbH, 3500 Krems an der Donau (AT)
(72) Erfinder: WALLISCH, Christoph, 3812 Gr.-Siegharts (AT); WEITZ, Franz, 3500 Krems (AT); HARRER, Ewald, 3500 Krems (AT)
(74) Vertreter: Jell, Friedrich
(86) Internationale Anmeldenummer: PCT/AT2015/050235
(87) Internationale Veröffentlichungsnummer: WO 2016/044873

(56) Entgegenhaltungen:
- CH-A- 535 003
- DE-A1- 19 502 955
- FR-A- 397 014
- FR-A- 1 233 597
- FR-A1- 2 352 140

## Beschreibung

### Technisches Gebiet

Die Erfindung betrifft eine Vorrichtung und einen Pfahl für vorzugsweise den Wein- oder Obstbau, mit einem Drahtspanner, der eine drehbare Spannwelle und mindestens zwei die Spannwelle lagernde Kulissenführungen aufweist, welche Spannwelle eine äußere polygonale Querschnittsform für ein Maul eines Maulschlüssels, eine Halterung für mindestens einen Draht und zumindest bereichsweise eine Raststruktur aufweist, wobei mindestens eine der beiden Kulissenführungen zumindest bereichsweise eine Gegenraststruktur aufweist, welche Gegenraststruktur mit der Raststruktur der Spannwelle zur Ausbildung eines Rastgesperres zusammenwirkt, um mindestens eine Drehrichtung der Spannwelle zu sperren, und mit einem offenen Hohlprofil, das mehrere Schenkel aufweist und mit je einem Loch in zwei gegenüberliegenden Schenkeln des Hohlprofils jeweils die Kulissenführung für die Spannwelle des Drahtspanners ausbildet.

### Stand der Technik

Pfähle für den Wein- oder Obstbau mit einem offenen Blechhohlprofil, das mit einem Drahtspanner versehen ist, sind aus dem Stand der Technik bekannt (FR2352140A1). Der Drahtspanner umfasst hierzu eine Spannwelle und mindestens zwei die Spannwelle lagernde Kulissenführungen, die von Löchern in gegenüberliegenden Schenkeln des Blechhohlprofils ausgebildet werden. Einer der beiden Kulissenführungen weist eine Gegenraststruktur auf, die mit der Raststruktur der Spannwelle zur Ausbildung eines Rastgesperres zusammenwirkt. Damit kann eine Drehrichtung der Spannwelle gesperrt werden, um bei gespanntem Draht ein selbstständiges Zurückdrehen der Spannwelle zu blockieren bzw. den Draht zu spannen. Hierzu wird der Draht in einem mittigen der Spannwelle vorgesehenen Drahtdurchtrittsloch verkanntet, das an der Spannwelle eine Halterung für den Draht ausbildet. Die Spannwelle kann mithilfe eines Maulschlüssels gedreht werden, für dessen Maul die Spannwelle eine äußere polygonale Querschnittsform an einem dem Hohlprofil vorstehenden Endabschnitt aufweist. Nachteilig zeigten derartige Pfähle erhebliche Verschleißerscheinungen an der Gegenraststruktur der Kulissenführung, wobei sogar Profilverformungen an den die Kulissenführungen ausbildenden Schenkeln des Hohlprofils beobachtet werden konnten. Dies führt gerade für Pfähle mit einem offenen Hohlprofil zu einer erhöhten Gefahr eines mechanischen Stabilitätsverlusts. Zudem zeigte sich gerade bei vergleichsweise hohen aufzuwendenden Spannkräften zum Spannen des Drahts ein unerwartet hoher Kraftaufwand beim Weiterdrehen der Spannwelle, was die Handhabung des Drahtspanners erschwert.

### Darstellung der Erfindung

Es ist daher die Aufgabe der Erfindung, einen Pfahl für den Wein- oder Obstbau derart konstruktiv zu verändern, dass dieser trotz seines offenen Hohlprofils standfest zum Spannen eines Drahts verwendet werden kann. Des Weiteren soll der Pfahl einfach handhabbar und in seiner Konstruktion einfach ausgeführt sein.

Die Erfindung löst die gestellte Aufgabe dadurch, dass die Spannwelle zwischen den zwei gegenüberliegenden Schenkeln des Hohlprofils die äußere polygonale Querschnittsform für das Maul des Maulschlüssels aufweist.

Weist die Spannwelle zwischen den zwei gegenüberliegenden Schenkeln des Hohlprofils die äußere polygonale Querschnittsform für das Maul des Maulschlüssels auf, kann der Pfahl für den Wein- oder Obstbau trotz seines offenen Hohlprofils bedenkenlos mit einem Drahtspanner versehen werden. Die Spannkräfte auf die Spannwelle können nämlich durch den Krafteintrag zwischen den beiden Kulissenführung auf beide Schenkel des Hohlprofils aufgeteilt und sicherer bzw. gleichmäßiger in das Hohlprofil bzw. in den Pfahl eingeleitet werden - wodurch etwa Profilverformungen am Hohlprofil verbessert vermeidbar werden können. Der erfindungsgemäße Pfahl kann sich also als besonders standfest herausstellen. Zudem kann mit solch einem positionierten Krafteintrag auf die Spannwelle die Gefahr eines Verkantens der Spannwelle reduziert werden, was selbst bei vergleichsweise hohen Spannkräften einen leichtgängigen Drahtspanner ermöglichen kann. Somit ist nicht nur ein standfester Pfahl, vorzugsweise Endpfahl, für den Wein- oder Obstbau geschaffen, sondern es kann auch ein Pfahl vorliegen, der stets einfach handzuhaben ist. Zudem ist der Pfahl durch die vergleichsweise einfach herzustellende Spannwelle konstruktiv einfach aufgebaut und kann in weiterer Folge auch kostengünstig hergestellt werden.

Die Handhabung des Rastgesperres kann erleichtert werden, wenn die Spannwelle in einem ersten Abschnitt der Kulissenführung frei drehbar und in einem anderen, zweiten Abschnitt der Kulissenführung drehfest gelagert ist. Je nach Lage der Spannwelle in der Kulissenführung kann so nämlich eindeutig zwischen den beiden Betriebsmodi - einem freien Drehen zum Spannen des Drahts oder einem Fixieren einer gewünschten Spannlage - unterschieden werden.

Die Rastbewegung der Spannwelle kann auch bei hohen Spannkräften auf die Spannwelle erhalten bleiben, wenn eine Raste der Raststruktur bei der im zweiten Abschnitt drehfest gelagerten Spannwelle in den ersten Abschnitt der Kulissenführung ragt und sich beim Drehen der Spannwelle an der Kulissenführung abwälzt.

Weist die Kulissenführung eine asymmetrische Nierenform auf, kann dies einen vergleichsweise sanften Verlauf der Kulissenführung gewährleisten. Insbesondere durch eine Wölbung der Kulissenführung nach oben ist es möglich, hohe Materialbelastungen beim Betätigen der Spannwelle zu vermeiden - womit unter anderem eine äußerst robuste Lagerung der Spannwelle in der Kulissenführung sichergestellt wird. Des Weiteren kann durch die Nierenform der Übergang von einer Festlagerung in eine drehbare Loslagerung der Spannwelle - und umgekehrt - erleichtert werden. Erfindungsgemäß wird somit ein besonders standfester und sicher zu bedienender Pfahl zur Verfügung gestellt - unter anderem, da ein Festsitzen der Spannwelle in der Kulissenführung verbessert vermieden werden kann. Vorzugsweise wird diese Nierenform aus zwei aneinander anschließenden Nierenlappen gebildet, wobei die beiden Abschnitte der Kulissenführung von unterschiedlichen Nierenlappen ausgebildet werden, um damit die Handhabung des Rastgesperres des Pfahls weiter zu erleichtern.

Eine besonders sichere Rastlage der Spannwelle in der Kulissenführung kann sichergestellt werden, wenn der zweite Abschnitt dem ersten Abschnitt der Kulissenführung in Zugrichtung des gespannten Drahts nachfolgt, in welchem zweiten Abschnitt die Kulissenführung endet. Die Zugbelastung des Drahts zwingt die Spannwelle in die Rastlage, und sichert somit die Spannwelle im Rastgesperre.

Der Drahtspanner kann in seiner Sicherheit gegenüber einem unbeabsichtigten Lösen deutlich verbessert werden, wenn beide Kulissenführungen gleich ausgebildet sind. Die Spannwelle verrastet nämlich mit beiden Schenkeln des Hohlprofils, was den Drahtspanner nicht nur belastbarer ausgestaltet, sondern auch das offene Hohlprofil gegenüber Verformungen an den Schenkeln mit der Kulissenführung fernhält. Die Standfestigkeit des Pfahls kann damit weiter erhöht werden.

Mit einem Maulschlüssel kann die Spannwelle vergleichsweise einfach gehandhabt werden, wenn die Spannwelle eine regelmäßig konvexen Querschnittsform hat. Zudem kann durch diese Außenform die Spannwelle einem Maulschlüssel allseitig mit gleichem Formschluss zugänglich sein, um die Handhabung des Pfahls zusätzlich zu erleichtern.

Ist die Halterung für den Draht an einem dem Hohlprofil vorstehenden Endabschnitt der Spannwelle vorgesehen, kann der Draht an der vom Hohlprofil freigestellten Halterung einfach handhabbar vorgesehen werden.
Die Halterung kann ein Drahtdurchtrittsloch aufweisen, durch das der Draht durchgeführt wird und so an der Spannwelle befestigt ist, beispielsweise in dem sich der Draht beim Drehen der Spannwelle verkantet.

Sind an beiden Endabschnitte der Spannwelle je eine Halterung für je einen Draht vorgesehen, kann sich der erfindungsgemäße Pfahl zusätzlich durch besonders variable und einfache Verwendbarkeit zum Spannen eines Drahts oder mehrere Drähte auszeichnen. Zudem können damit zwei Drähte gleichzeitig auf Abstand relativ zueinander gebracht werden und mithilfe der zwischen diesen Drähten bzw. zwischen den Kulissenführungen auf die Spannwelle wirkenden Maulschlüssel zuverlässig mit vergleichsweise geringem Kraftaufwand gespannt werden. Die Handhabung des Pfahls kann damit deutlich verbessert werden.

Weist die Spannwelle zwei Wellenteile auf, die über eine Achse relativ zueinander drehbar gelagert sind, kann dies der verbesserten Handhabung des Pfahls dienlich sein. So ist unter anderem eine Erhöhung der Leichtgängigkeit beim Öffnen des Rastgesperres zu erreichen. Ein Draht kann dadurch über das Bewegen bzw. Drehen lediglich eines Wellenteils gespannt werden, wodurch nur mehr die Lagerkräfte in einer der Kulissenführungen überwunden werden müssen.
Insbesondere können diese Wellenteile auch aneinander angrenzend ausgeführt sein, was zu konstruktiv besonders einfachen Verhältnissen führen kann.
Durch beide relativ zueinander drehbar gelagerten Wellenteile kann auch ein variableres Einstellen der Spannkräfte von Drähten sowie deren besonders variable Anordnung am erfindungsgemäßen Pfahl ermöglicht werden, wenn jedes Wellenteil mindestens eine Halterung für einen Draht aufweist. So ist es also möglich, Drähte an unterschiedlichen Wellenteilen einer Spannwelle unabhängig voneinander zu bedienen und in Ihrer Spannung einzustellen. Als einfache und dennoch zuverlässige Halterung der Drähte an dem jeweiligen Wellenteil der Spannwelle kann sich ein Drahtdurchtrittsloch an den Wellenteilen auszeichnen. Die Handhabung des erfindungsgemäßen Pfahls ist somit weiter erleichtert bzw. dessen Einsatzmöglichkeiten erhöht.

Der konstruktive Aufwand kann bei hoher Standfestigkeit einer mehrteiligen Spannwelle vereinfacht werden, wenn ein Wellenteil die Achse ausbildet, auf der das andere zumindest teilweise hohle Wellenteil drehbar gelagert ist. Beispielsweise kann ein Wellenstummel dieses Wellenteils solch eine Achse ausbilden.

Das Rastgesperre kann unter Zuhilfenahme des offenen Hohlprofils und eines Maulschlüssels verhältnismäßig einfach bedient werden, wenn das Hohlprofil einen zwischen den gegenüberliegenden Schenkeln des Hohlprofils verlaufenden Steg aufweist, der gegenüber der äußeren polygonalen Querschnittsform der Spannwelle für das Maul des Maulschlüssels derart beabstandet verläuft, dass ein an diese Spannwelle des Pfahls angesetzter Maulschlüssel sich beim Drehen der Spannwelle am Steg des Hohlprofils abwälzt, um damit mithilfe eines zumindest axialen Verlagerns der Spannwelle in der Kulissenführung das Rastgesperre zu entsperren. Damit kann es unter anderem auch möglich werden, selbst eine in einer Rastlage feststeckende und/oder verkeilte Spannwelle sicher zu lösen, was die Handhabung des Rastgesperres des Pfahls und damit des Pfahls selbst weiter erleichtern kann.

Die Bedienung des Rastgesperres kann unter Zuhilfenahme von erhöhten Hebelkräften weiter erleichter werden, wenn hierzu der Maulschlüssel ein an der äußeren Querschnittsform der Spannwelle des Pfahls ansetzbares Maul zum Drehen der Spannwelle sowie eine in eine Auskragung mit einem Anschlag auslaufende Maulbacke aufweist, wobei der Maulschlüssel zum Entsperren des Rastgesperres mithilfe eines zumindest axialen Verlagerns der Spannwelle in der Kulissenführung aufgrund des beim Drehen der Spannwelle sich am Hohlprofil abwälzenden Anschlags der Maulbacke ausgebildet ist. Die Bedienbarkeit des Rastgesperres des Pfahls kann damit weiter erleichtert werden.

Ist die die Auskragung aufweisende Maulbacke in deren Backenlänge mit der Auskragung für ein Abwälzen einer Raste der Spannwelle im ersten Abschnitt der jeweiligen Kulissenführung ausgebildet, kann die Spannwelle vor der Gegenraststruktur der Kulissenführung unbeeinflusst vergleichsweise einfach gedreht bzw. damit auch der Draht gespannt werden.

Vorstehend Genanntes kann sichergestellt werden, wenn die die Auskragung aufweisende Maulbacke in deren Backenlänge zur Erhöhung des Normalabstands zwischen Hohlprofil und Achse der gesperrten Spannwelle um mindestens das 1,3-fache beim Drehen der Spannwelle ausgebildet ist.

Das Einrasten in einer neuen Drehlage kann durch den Maulschlüssel erleichtert werden, wenn die vom Maulgrund ausgehende gerade Maulseitenfläche am, die Auskragung aufweisenden Maulbacken in der Seitellänge um mindestens das 0,5-fache kleiner ist als der Normalabstand zwischen Hohlprofil und Achse der gesperrten Spannwelle.

### Kurze Beschreibung der Zeichnungen

In den Figuren ist beispielsweise der Erfindungsgegenstand anhand eines Ausführungsgegenstands näher dargestellt. Es zeigen
- Fig. 1: eine teilweise aufgerissene Seitenansicht eines Pfahls mit einem Maulschlüssel,
- Fig. 2: eine teilweise aufgerissene Frontansicht auf den nach Fig. 1 dargestellten Pfahl,
- Fig. 3: eine Draufsicht auf den nach Fig. 1 dargestellten Pfahl,
- Fig. 4: eine vergrößerte Teilansicht der Fig. 2 und
- Fig. 5: in vergrößerter Darstellung die Kulissenführung des nach Fig. 1 dargestellten Pfahls.

### Weg zur Ausführung der Erfindung

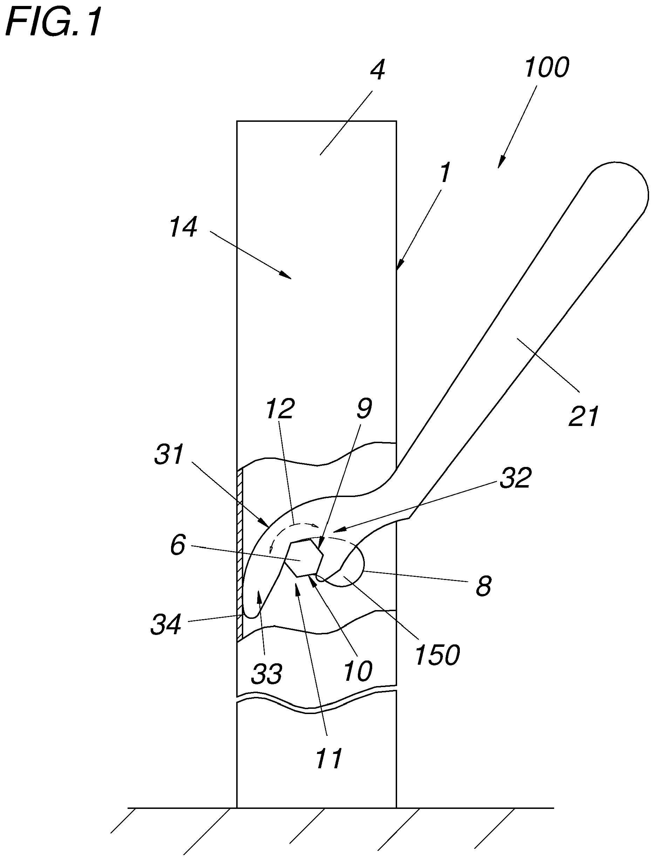

Gemäß Fig. 1 ist beispielsweise ein Pfahl 1 für den Weinanbau dargestellt, der als Endpfahl am Ende einer Reihe von nicht näher dargestellten Spalierpfählen vorgesehen ist. Im Allgemeinen wird erwähnt, dass der Pfahl 1 auch für den Obstbau oder auch für andere Zwecke verwendet werden kann.

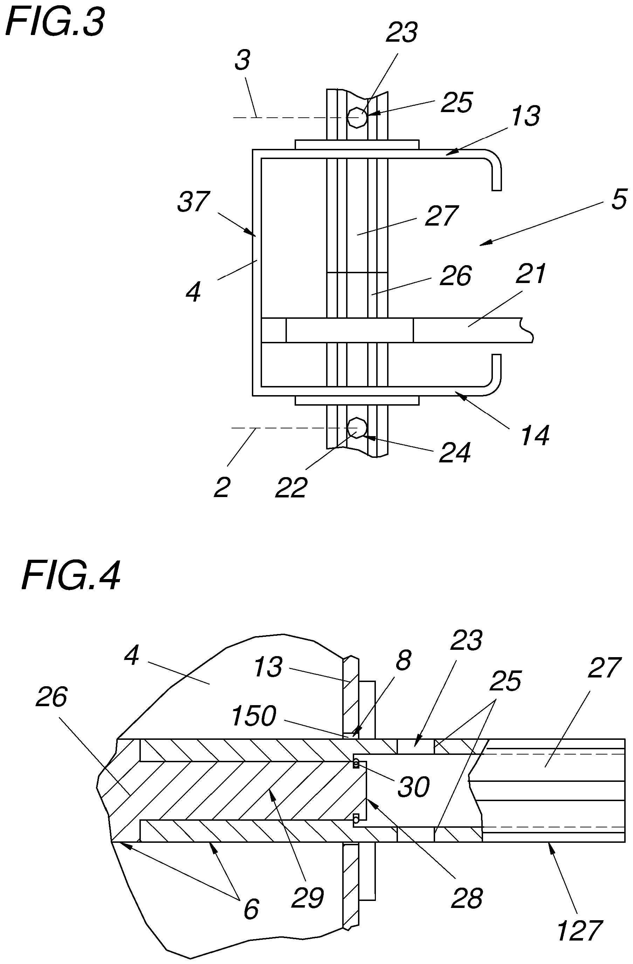

Bekanntermaßen wird solche ein Pfahl 1 als Ankerpunkt zum Spannen von Drähten 2, 3 verwendet, die sich von Spalierpfahl zu Spalierpfahl erstrecken und von diesen Spalierpfählen meist auch geführt werden. Der Pfahl 1 weist ein offenes Hohlprofil 4 auf, wie dies besonders auch in der Draufsicht nach Fig. 3 zu erkennen ist. Das Hohlprofil 4 kann beispielsweise aus einem Blech, vorzugsweise aus einem verzinkten Stahlblech, gefertigt sein und damit ein Blechprofil darstellen.

Zum Spannen des Drahts 2, 3 ist ein Drahtspanner 5 vorgesehen, der eine mit dem Draht 2, 3 verbindbare und drehbare Spannwelle 6 aufweist, wofür diese Spannwelle 6 in zwei parallelen Kulissenführungen 7, 8 gelagert ist. Da die Spannwelle 6 eine Raststruktur 9 und die zwei Kulissenführungen 7, 8 eine Gegenraststruktur 10 aufweisen, die mit der Raststruktur 9 der Spannwelle zusammenwirkt, wird ein Rastgesperre 11 ausgebildet, mit der die beiden Drehrichtungen 12 der drehbaren Spannwelle 6 gesperrt werden können. Auf diese Weise wird ein selbstständiges Rückdrehen der Spannwelle vermieden.

Vorzugsweise sind beide Kulissenführungen 7, 8 gleich ausgeführt, um die Belastbarkeit des Drahtspanners 5 zu erhöhen - es ist aber auch vorstellbar, dass nur eine der Kulissenführungen 7, 8 eine Gegenraststruktur 10 aufweist. Diese Kulissenführungen 7, 8 werden gebildet, in dem in zwei gegenüberliegenden Schenkeln 13, 14 des Hohlprofils 4 je ein Loch 150 eingebracht wird.

Die Spannwelle 6 weist zudem eine äußere polygonale, regelmäßig konvexe Querschnittsform 20 mit sechs Seiten auf, was das Ansetzen eines Maulschlüssels 21 von praktisch allen Seiten ermöglicht, um in weiterer Folge den Draht 2, 3 zu spannen.

Indem jedoch erfindungsgemäß die Spannwelle 6 zwischen den zwei gegenüberliegenden Schenkeln 13, 14 des Hohlprofils 4 diese äußere polygonale Querschnittsform 20 für das Maul 32 des Maulschlüssels 21 aufweist, ist beim Spannen des Drahts eine Aufteilung der Betätigungskräfte auf beide Schenkel 13, 14 des Hohlprofils 4 sichergestellt, an welchen Schenkeln 13, 14 die zwei Kulissenführungen 7, 8 vorgesehen sind. Damit ist trotz des Drahtspanner 5 bzw. dessen Benützung - auch bei vergleichsweise hohen Spannkräften auf die Spannwelle 6- die Gefahr eines Verzugs am offenen Hohlprofil 4 gebannt, was eine besonders hohe Standfestigkeit des Pfahls 1 sicherstellt.

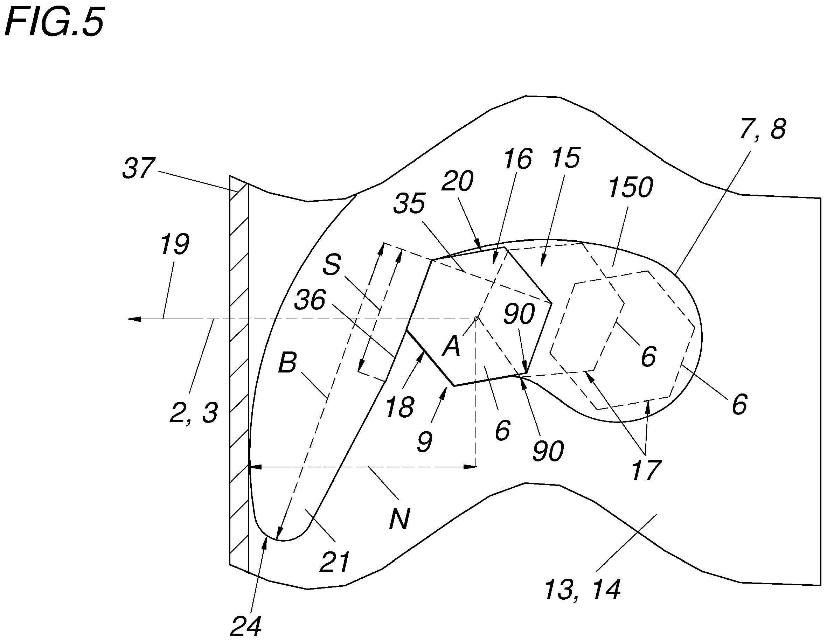

Wie insbesondere der Fig. 5 zu entnehmen, weisen die beiden Kulissenführungen 7, 8 zwei Abschnitte 15, 16 auf. Im ersten Abschnitt 15 ist die Spannwelle 6 in der Kulissenführung 7, 8 frei drehbar gelagert - sie nimmt also eine frei drehbare Lage 17 ein. Im zweiten Abschnitt 16 ist die Spannwelle 6 in der drehfest gelagert - somit nimmt sie also eine Rastlage 18 ein.

Die Abschnitte 15 und 16 eines jeweiligen Schenkels 13, 14 bilden zusammen eine Kulissenführung 7, 8 mit asymmetrischen Nierenform aus. Durch diese Ausführungsform können die auf den Pfahl wirkenden Kräfte beim Spannen eines Drahtes 2, 3 verbessert geleitet werden. Bedienung und Standfestigkeit sind somit verbessert - unter anderem, da beim Spannen mithilfe des Maulschlüssels 21, der sich beim Spannen am Hohlprofil 4 abstützt, eine vorteilhafte Führung der Spannwelle innerhalb der Kulissenführung 7, 8 erfolgt.

Wie in der Zusammenschau der Figuren 3 und 5 zu erkennen, folgt der zweiten Abschnitt 16 dem ersten Abschnitt 15 der Kulissenführungen 7, 8 in Zugrichtung 19 des jeweiligen Drahts 2, 3 nach, um die Spannwelle 6 über die Spannkräfte in den Kulissenführungen 7, 8 zu sichern. Dies ist umso standfester, wenn die Kulissenführungen 7, 8 jeweils im zweiten Abschnitt 16 enden.

Zum festen Verbinden von Drähten 2, 3 mit der Spannwelle 6 sind Halterungen 22, 23 vorgesehen. Im Ausführungsbeispiel sind diese Halterungen 22, 23 in Form von in die Spannwelle 6 eingebrachten Drahtdurchtrittslöchern 24, 25 ausgebildet, wobei auch Schlitze in der Spannwelle 6 oder dergleichen vorstellbar sind.

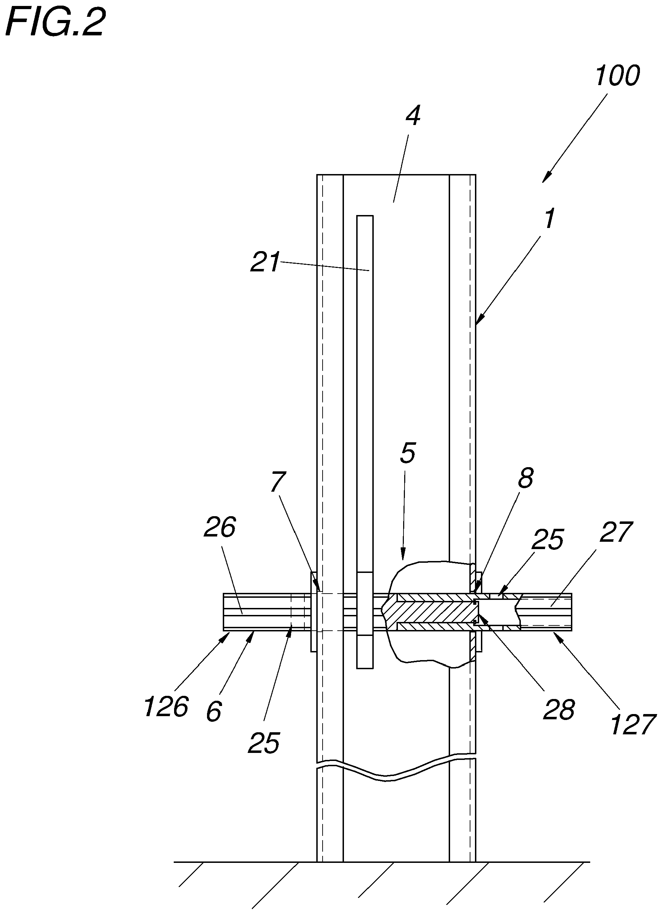

Diese Halterung 22, 23 für den Draht 2, 3 sind je an einem der Endabschnitte 126, 127 der Spannwelle 6 vorgesehen, welche Endabschnitte 126, 127 dem Hohlprofil 4 vorstehen bzw damit auskragen, wie dies in Fig. 2 beispielsweise erkannt werden kann. Damit sind diese Halterungen 22, 23 einfach zugänglich. Die Handhabung des Pfahls 1 erleichtert sich dadurch weiter.

Auch sind dadurch diese Halterungen 22, 23 unabhängig voneinander betätigbar. Wie der Fig. 3 insbesondere zu entnehmen, befindet sich nämlich auf jedem Wellenteil 26, 27 eine Halterung 22, 23 für den jeweiligen Draht 2, 3. Dadurch können zwei Drähte 2, 3 vorteilhafterweise unabhängig voneinander gespannt werden, da die Spannwelle 6 zwei aneinander angrenzende Wellenteile 26, 27 aufweist, die über eine Achse 28 relativ zueinander drehbar gelagert sind. Hierzu endet das Wellenteil 26 in einem Wellenstummel 29, auf welchem das hohle andere Wellenteil 27 drehbar gelagert ist. Diese radiale Lagerung wird axial von einem Splint 30 begrenzt - wodurch zwischen den beiden Wellenteilen 26, 27 ein Radiallager geschaffen ist, das sich hinsichtlich Standfestigkeit und konstruktive Einfachheit auszeichnet.

Zudem ist nach Fig. 1 an der Vorrichtung 100 aus Pfahl 1 und aus Maulschlüssel 21 zu erkennen, dass der Maulschlüssel 21 beim Drehen der Spannwelle 6 das Lösen des Rastgesperres 11 durch Ausnützung von Hebelkräften unterstützt, in dem sich der Maulschlüssel 21 am Hohlprofil 4 bzw. dessen Steg 37 zwischen den beiden gegenüberliegenden Schenkeln 13, 14 abwälzt.
Hierfür verlängert sich ein Maulbacken 31 des Mauls 32 des Maulschlüssels 21 um eine Auskragung 33, die einen vergleichsweise langen Anschlag 34 für das Hohlprofil 4 ausbildet. Ein anders angeformter Anschlag 34 am Maulschlüssel 21 bzw. ein anderer Maulschlüssel 21 mit einem Anschlag 34 bleibt weiter vorstellbar, was nicht näher dargestellt worden ist. Das Maul 32 ist an Querschnittsform 20 der Spannwelle 6 angepasst bzw. kann diese zum Drehen fest packen. Wird nun der Maulschlüssels 21 zum Drehen der Spannwelle 6 betätigt, drängt der Anschlag die Spannwelle aus der Rastlage 18 im zweiten Abschnitt 16 in die frei drehbare Lage 17 im ersten Abschnitt 15 der Kulissenführungen 7, 8, wie dies in Zusammenschau mit Fig. 5 zu erkennen ist. Damit ist das Rastgesperre 11 leicht zu entsperren, was die Handhabung des Pfahls 1 erleichtert.

Gemäß Fig. 5 werden mehrere frei drehbaren Lagen 17 der Spannwelle 6 dargestellt. In einer frei drehbaren Lage 17 der Spannwelle 6 steht eine Raste 90 der Raststruktur 9 der Spannwelle 6 mit der diesbezüglichen Kulissenführungen 7, 8 in Eingriff, um damit die Spannwelle 6 sicher weiterzudrehen. Hierfür ragt die Raste 90 bei der im zweiten Abschnitt 16 drehfest gelagerten Spannwelle 6 in den ersten Abschnitt 15 der Kulissenführung 7, 8 und wälzt sich damit beim Drehen der Spannwelle 6 an der diesbezüglichen Kulissenführung 7, 8 ab. Diese Art des Drehens der Spannwelle wird durch das nach Fig. 1 dargestellte Maulwerkzeug 21 ermöglicht, in dem die Auskragung 32 aufweisende Maulbacke 31 in deren Backenlänge B mit der Auskragung 32 für ein Abwälzen einer Raste 90 der Spannwelle 6 im ersten Abschnitt 15 der jeweiligen Kulissenführung 7, 8 ausgebildet ist.

Konstruktiv einfach gelöst, in dem die die Auskragung 32 aufweisende Maulbacke 31 (des in Fig. 5 nur teilweise dargestellten Maulschlüssel 21) in deren Backenlänge B zur Erhöhung des Normalabstand N zwischen Hohlprofil 4 (bzw. dessen Steg 37 zwischen den Schenkeln 13, 14) und Achse A der gesperrten Spannwelle 6 um mindestens das 1,3-fache beim Drehen der Spannwelle 6 ausgebildet ist bzw. derart lang ist. In anderen Worten, der neue Normalabstand zwischen Hohlprofil 4 und Achse A der Spannwelle 6 in der frei drehbaren Lage 17 erhöht mindestens auf das 1,3-fache des in Fig. 1 eingezeichneten Normalabstand N. Damit wälzt sich die Raste 90 vor der Gegenraststruktur 10 des zweiten Abschnitts 16 an der jeweiligen Kulissenführung 7, 8 ab.

Für ein Einrasten in einer neuen Rastdrehstellung der Spannwelle 6 ist die vom Maulgrund 35 ausgehende gerade Maulseitenfläche 36 am Maulbacken 31, der die Auskragung 32 aufweist, in der Seitenlänge S um mindestens das 0,5-fache kleiner als der Normalabstand N zwischen Hohlprofil 4 und Achse A der gesperrten Spannwelle 6.

## Patentansprüche

1. Pfahl für vorzugsweise den Wein- oder Obstbau, mit einem Drahtspanner (5), der eine drehbare Spannwelle (6) und mindestens zwei die Spannwelle (6) lagernde Kulissenführungen (7, 8) aufweist, welche Spannwelle (6) eine äußere polygonale Querschnittsform (20) für ein Maul (32) eines Maulschlüssels (21), eine Halterung (22, 23) für mindestens einen Draht (2, 3) und zumindest bereichsweise eine Raststruktur (9) aufweist, wobei mindestens eine der beiden Kulissenführungen (7, 8) zumindest bereichsweise eine Gegenraststruktur (10) aufweist, welche Gegenraststruktur (10) mit der Raststruktur (9) der Spannwelle (6) zur Ausbildung eines Rastgesperres (11) zusammenwirkt, um mindestens eine Drehrichtung (12) der Spannwelle (6) zu sperren, und mit einem offenen Hohlprofil (4), das mehrere Schenkel (13, 14) aufweist und mit je einem Loch (150) in zwei gegenüberliegenden Schenkeln (13, 14) des Hohlprofils (4) jeweils die Kulissenführung (7, 8) für die Spannwelle (6) des Drahtspanners (5) ausbildet, **dadurch gekennzeichnet, dass** die Spannwelle (6) zwischen den zwei gegenüberliegenden Schenkeln (13, 14) des Hohlprofils (4) die äußere polygonale Querschnittsform (20) für das Maul (32) des Maulschlüssels (21) aufweist.

2. Pfahl nach Anspruch 1, **dadurch gekennzeichnet, dass** die Spannwelle (6) in einem ersten Abschnitt (15) der Kulissenführung (7, 8) frei drehbar und in einem anderen, zweiten Abschnitt (16) der Kulissenführung (7, 8) drehfest gelagert ist.

3. Pfahl nach Anspruch 1 oder 2, **dadurch gekennzeichnet, dass** eine Raste (90) der Raststruktur (9) bei der im zweiten Abschnitt (16) drehfest gelagerten Spannwelle (6) in den ersten Abschnitt (15) der Kulissenführung (7,8) ragt und sich beim Drehen der Spannwelle (6) an der Kulissenführung (7, 8) abwälzt.

4. Pfahl nach Anspruch 1, 2 oder 3, **dadurch gekennzeichnet, dass** die Kulissenführung (7, 8) eine asymmetrische Nierenform aufweist.

5. Pfahl nach Anspruch 4, **dadurch gekennzeichnet, dass** der zweite Abschnitt (16) dem ersten Abschnitt (15) der Kulissenführung (7, 8) in Zugrichtung des gespannten Drahts (2, 3) nachfolgt, in welchem zweiten Abschnitt (16) die Kulissenführung (7, 8) endet.

6. Pfahl nach einem der Ansprüche 1 bis 5, **dadurch gekennzeichnet, dass** beide Kulissenführungen (7, 8) gleich ausgebildet sind.

7. Pfahl nach einem der Ansprüche 1 bis 6, **dadurch gekennzeichnet, dass** die Spannwelle (6) eine äußere regelmäßig konvexe Querschnittsform (20) aufweist.

8. Pfahl nach einem der Ansprüche 1 bis 7, **dadurch gekennzeichnet, dass** die Halterung (22, 23) für den Draht (2, 3) an einem dem Hohlprofil (4) vorstehenden Endabschnitt (126, 127) der Spannwelle (6) vorgesehen ist.

9. Pfahl nach Anspruch 8, **dadurch gekennzeichnet, dass** an beiden Endabschnitte (126, 127) der Spannwelle (6) je eine Halterung (22, 23) für je einen Draht (2, 3) vorgesehen sind.

10. Pfahl nach einem der Ansprüche 1 bis 9, **dadurch gekennzeichnet, dass** die Spannwelle (6) zwei Wellenteile (26, 27) aufweist, die über eine Achse (28) relativ zueinander drehbar gelagert sind.

11. Pfahl nach Anspruch 10, **dadurch gekennzeichnet, dass** ein Wellenteil, insbesondere ein Wellenstummel (29) des Wellenteils (26), die Achse (28) ausbildet, auf der das andere zumindest teilweise hohle Wellenteil drehbar gelagert ist.

12. Pfahl nach einem der Ansprüche 1 bis 11, **dadurch gekennzeichnet, dass** das Hohlprofil (4) einen zwischen den gegenüberliegenden Schenkeln (13, 14) des Hohlprofils (4) verlaufenden Steg (37) aufweist, der gegenüber der äußeren polygonalen Querschnittsform (20) der Spannwelle (6) für das Maul (32) des Maulschlüssels (21) derart beabstandet verläuft, dass ein an diese Spannwelle (6) des Pfahls (1) angesetzter Maulschlüssel (21) sich beim Drehen der Spannwelle (6) am Steg (37) des Hohlprofils (4) abwälzt, um mithilfe eines zumindest axialen Verlagerns der Spannwelle (6) in der Kulissenführung (7, 8) das Rastgesperre (11) zu entsperren.

13. Vorrichtung mit einem Pfahl (1) nach einem der Ansprüche 1 bis 12 und mit einem Maulschlüssel (21), der ein an der äußeren Querschnittsform (20) der Spannwelle (6) des Pfahls (1) ansetzbares Maul (32) zum Drehen der Spannwelle (6) sowie eine in eine Auskragung (32) mit einem Anschlag (33) auslaufende Maulbacke (31) aufweist, wobei der Maulschlüssel (21) zum Entsperren des Rastgesperres (11) mithilfe eines zumindest axialen Verlagerns der Spannwelle (6) in der Kulissenführung (7, 8) aufgrund des beim Drehen der Spannwelle (6) sich am Hohlprofil (4) abwälzenden Anschlags (33) der Maulbacke (31) ausgebildet ist.

14. Vorrichtung nach Anspruch 13, **dadurch gekennzeichnet, dass** die die Auskragung (32) aufweisende Maulbacke (31) in deren Backenlänge (B) mit der Auskragung (32) für ein Abwälzen einer Raste (90) der Spannwelle (6) im ersten Abschnitt (15) der jeweiligen Kulissenführung (7,8) ausgebildet ist.

15. Vorrichtung nach Anspruch 13 oder 14, **dadurch gekennzeichnet, dass** die die Auskragung (32) aufweisende Maulbacke (31) in deren Backenlänge (B) zur Erhöhung des Normalabstands (N) zwischen Hohlprofil (4) und Achse (A) der gesperrten Spannwelle (6) um mindestens das 1,3-fache beim Drehen der Spannwelle (6) ausgebildet ist.

16. Vorrichtung nach Anspruch 13, 14 oder 15, **dadurch gekennzeichnet, dass** die vom Maulgrund (35) ausgehende gerade Maulseitenfläche (36) am, die Auskragung (32) aufweisenden Maulbacken (31) in der Seitellänge (S) um mindestens das 0,5-fache kleiner als der Normalabstand (N) zwischen Hohlprofil (4) und Achse (A) der gesperrten Spannwelle (6) ist.

## Claims

1. Pole for preferably viticulture or fruit-growing, having a wire tensioner (5) which has a rotatable expansion shaft (6) and at least two link guides (7, 8) which support the expansion shaft (6), which expansion shaft (6) has an outer polygonal cross-sectional shape (20) for a mouth (32) of an open-end wrench (21), a holder (22, 23) for at least one wire (2, 3) and a latching structure (9) at least in sections, wherein at least one of the two link guides (7, 8) has a counter-latching structure (10) at least in sections, which counter-latching structure (10) cooperates with the latching structure (9) of the expansion shaft (6) to form a latching lock (11), in order to block at least one direction of rotation (12) of the expansion shaft (6), and having an open hollow profile (4) which has a plurality of limbs (13, 14) and a hole (150) in each of two opposite limbs (13, 14) of the hollow profile (4) forming in each case the link guide (7, 8) for the expansion shaft (6) of the wire tensioner (5), **characterized in that** the expansion shaft (6) has the outer polygonal cross-sectional shape (20) for the mouth (32) of the open-end wrench (21) between the two opposite limbs (13, 14) of the hollow profile (4).

2. Pole according to claim 1, **characterized in that** the expansion shaft (6) is freely rotatable in a first section (15) of the link guide (7, 8) and is mounted in a rotationally fixed manner in another, second section (16) of the link guide (7, 8).

3. Pole according to claim 1 or 2, **characterized in that** a detent (90) of the latching structure (9) in the expansion shaft (6) mounted in a rotationally fixed manner in the second section (16) projects into the first section (15) of the link guide (7, 8) and rolls on the link guide (7, 8) when the expansion shaft (6) rotates.

4. Pole according to claim 1, 2 or 3, **characterized in that** the link guide (7, 8) has an asymmetrical kidney shape.

5. Pole according to claim 4, **characterized in that** the second section (16) follows the first section (15) of the link guide (7, 8) in the direction of tension of the tensioned wire (2, 3), in which second section (16) the link guide (7, 8) ends.

6. Pole according to one of claims 1 to 5, **characterized in that** the link guides (7, 8) are of identical design.

7. Pole according to one of claims 1 to 6, **characterized in that** the expansion shaft (6) has an outer regularly convex cross-sectional shape (20).

8. Pole according to one of claims 1 to 7, **characterized in that** the holder (22, 23) for the wire (2, 3) is provided on an end section (126, 127) of the expansion shaft (6) projecting from the hollow profile (4).

9. Pole according to claim 8, **characterized in that** a holder (22, 23) for one wire (2, 3) each is provided in each case at both end sections (126, 127) of the expansion shaft (6).

10. Pole according to one of claims 1 to 9, **characterized in that** the expansion shaft (6) has two shaft parts (26, 27) which are mounted rotatably relative to one another via an axle (28).

11. Pole according to claim 10, **characterized in that** one shaft part, in particular a shaft stub (29) of the shaft part (26), forms the axle (28) on which the other at least partially hollow shaft part is rotatably mounted.

12. Pole according to one of claims 1 to 11, **characterized in that** the hollow profile (4) has a web (37) extending between the opposing limbs (13, 14) of the hollow profile (4), which web (37) extends in a spaced apart manner relative to the outer polygonal cross-sectional shape (20) of the expansion shaft (6) for the mouth (32) of the open-end wrench (21) in such a way that an open-end wrench (21) attached to this expansion shaft (6) of the pole (1) rolls on the web (37) of the hollow profile (4) when the expansion shaft (6) is rotated, in order to unlock the latching lock (11) with the aid of an at least axial displacement of the expansion shaft (6) in the link guide (7, 8).

13. Device having a pole (1) according to one of claims 1 to 12 and having an open-end wrench (21) which has a mouth (32), which can be placed on the outer cross-sectional shape (20) of the expansion shaft (6) of the pole (1) for rotating the expansion shaft (6), and having a jaw (31) ending in a projection (32) with a stop (33), wherein the open-end wrench (21) is formed for unlocking the latching lock (11) by means of an at least axial displacement of the expansion shaft (6) in the link guide (7, 8) due to the stop (33) of the jaw (31) rolling on the hollow profile (4) when the expansion shaft (6) is rotated.

14. Device according to claim 13, **characterized in that** the jaw (31) having the projection (32) is formed in its jaw length (B) with the projection (32) for rolling a detent (90) of the expansion shaft (6) in the first section (15) of the respective link guide (7, 8).

15. Device according to claim 13 or 14, **characterized in that** the jaw (31) having the projection (32) is formed in its jaw length (B) for increasing the normal distance (N) between hollow profile (4) and axis (A) of the locked expansion shaft (6) by at least 1.3 times when the expansion shaft (6) is rotated.

16. Device according to claim 13, 14 or 15, **characterized in that** the straight side surface (36) on the jaw (31), which starts at the base (35) of the jaw and has the projection (32), is at least 0.5 times smaller in the lateral length (S) than the normal distance (N) between the hollow profile (4) and the axis (A) of the locked expansion shaft (6).

## Revendications

1. Poteau, de préférence pour la viticulture ou la fruiticulture, avec un tendeur de fil (5) qui présente un arbre de tension tournant (6) et au moins deux guides de coulisse (7, 8) supportant l'arbre de tension (6), lequel arbre de tension (6) présente une forme extérieure polygonale en coupe transversale (20) pour une mâchoire (32) d'une clé à fourche (21), une fixation (22, 23) pour au moins un fil (2, 3) et présente une structure d'encliquetage (9) au moins dans certaines zones, au moins l'un des deux guides de coulisse (7, 8) présentant une structure d'encliquetage complémentaire (10) au moins dans certaines zones, laquelle structure d'encliquetage complémentaire (10) coopère avec la structure d'encliquetage (9) de l'arbre de tension (6) pour former un dispositif d'encliquetage (11) pour bloquer au moins un sens de rotation (12) de l'arbre de tension (6), et avec un profilé creux ouvert (4) qui présente plusieurs branches (13, 14) et qui forme, avec un trou (150) dans chacune de deux branches opposées (13, 14) du profilé creux (4) les guides de coulisse (7, 8) pour l'arbre de tension (6) du tendeur de fil (5), **caractérisé en ce que** l'arbre de tension (6) présente la forme extérieure polygonale en coupe transversale (20) pour la mâchoire (32) de la clé à fourche (21) entre les deux branches opposées (13, 14) du profilé creux (4).

2. Poteau selon la revendication 1, **caractérisé en ce que** l'arbre de tension (6) peut tourner librement dans une première partie (15) du guide de coulisse (7, 8) et est monté fixe en rotation dans une autre, deuxième partie (16) du guide de coulisse (7, 8).

3. Poteau selon la revendication 1 ou 2, **caractérisé en ce qu'**un cran d'arrêt (90) de la structure d'encliquetage (9) sur l'arbre de tension (6) monté fixe en rotation dans la deuxième partie (16) fait saillie dans la première partie (15) du guide de coulisse (7, 8) et roule sur le guide de coulisse (7, 8) lorsque l'arbre de tension (6) tourne.

4. Poteau selon la revendication 1, 2 ou 3, **caractérisé en ce que** le guide de coulisse (7, 8) présente une forme de rein asymétrique.

5. Poteau selon la revendication 4, **caractérisé en ce que** la deuxième partie (16) suit la première partie (15) du guide de coulisse (7, 8) dans la direction de la tension du fil tendu (2, 3), dans laquelle deuxième partie (16) le guide de coulisse (7, 8) se termine.

6. Poteau selon l'une des revendications 1 à 5, **caractérisé en ce que** les deux guides de coulisse (7, 8) sont identiques.

7. Poteau selon l'une des revendications 1 à 6, **caractérisé en ce que** l'arbre de tension (6) présente une forme extérieure en coupe transversale régulièrement convexe (20).

8. Poteau selon l'une des revendications 1 à 7, **caractérisé en ce que** la fixation (22, 23) pour le fil (2, 3) est prévue sur une section d'extrémité (126, 127) de l'arbre de tension (6) faisant saillie du profilé creux (4).

9. Poteau selon la revendication 8, **caractérisé en ce qu'**une fixation (22, 23) pour un fil (2, 3) est prévue à chacune des deux sections d'extrémité (126, 127) de l'arbre de tension (6).

10. Poteau selon l'une des revendications 1 à 9, **caractérisé en ce que** l'arbre de tension (6) présente deux parties d'arbre (26, 27) qui sont montées de manière à pouvoir tourner l'une par rapport à l'autre par l'intermédiaire d'un axe (28).

11. Poteau selon la revendication 10, **caractérisé en ce qu'**une partie d'arbre, en particulier un bout d'arbre (29) de la partie d'arbre (26), forme l'axe (28) sur lequel l'autre partie d'arbre au moins partiellement creuse est montée rotative.

12. Poteau selon l'une des revendications 1 à 11, **caractérisé en ce que** le profilé creux (4) présente une partie de liaison (37) s'étendant entre les branches opposées (13, 14) du profilé creux (4), laquelle est espacée de la forme extérieure polygonale en coupe transversale (20) de l'arbre de tension (6) pour la mâchoire (32) de la clé à fourche (21) de telle sorte qu'une clé à fourche (21) appliquée à cet arbre de tension (6) du poteau (1) roule sur la partie de liaison (37) du profilé creux (4) lors de la rotation de l'arbre de tension (6), afin de débloquer le dispositif d'encliquetage (11) au moyen d'un déplacement au moins axial de l'arbre de tension (6) dans le guide de coulisse (7, 8).

13. Dispositif comportant un poteau (1) selon l'une des revendications 1 à 12 et une clé à fourche (21) qui présente une mâchoire (32) qui peut être appliquée sur la forme extérieure en coupe transversale (20) de l'arbre de tension (6) du poteau (1) pour faire tourner l'arbre de tension (6), ainsi qu'une mâchoire (31) se terminant par une saillie (32) avec une butée (33), dans lequel la clé à fourche (21) est conçue pour débloquer le dispositif d'encliquetage (11) au moyen d'un déplacement au moins axial de l'arbre de tension (6) dans le guide de coulisse (7, 8) en raison de la butée (33) de la mâchoire (31) qui roule sur le profilé creux (4) lors de la rotation de l'arbre de tension (6).

14. Dispositif selon la revendication 13, **caractérisé en ce que** la mâchoire (31) présentant la saillie (32) est conçue dans sa longueur de mâchoire (B) avec la saillie (32) pour faire rouler un cran d'arrêt (90) de l'arbre de tension (6) dans la première section (15) du guide de coulisse respectif (7, 8).

15. Dispositif selon la revendication 13 ou 14, **caractérisé en ce que** la mâchoire (31) présentant la saillie (32) est conçue dans sa longueur de mâchoire (B) pour augmenter la distance normale (N) entre le profilé creux (4) et l'axe (A) de l'arbre de tension (6) bloqué d'au moins 1,3 fois lors de la rotation de l'arbre de tension (6).

16. Dispositif selon la revendication 13, 14 ou 15, **caractérisé en ce que** la surface latérale de mâchoire rectiligne (36) partant du fond de mâchoire (35) sur la mâchoire (31) présentant la saillie (32) est plus petite dans la longueur latérale (S) d'au moins 0,5 fois la distance normale (N) entre le profilé creux (4) et l'axe (A) de l'arbre de tension bloqué (6).
